# EUROPÄISCHE PATENTSCHRIFT

(11) **EP 1 412 828 B1**
(45) Veröffentlichungstag und Bekanntmachung des Hinweises auf die Patenterteilung: **09.05.2007**
(21) Anmeldenummer: 02754488.1
(22) Anmeldetag: 02.08.2002
(51) Int. Cl.: G05D 1/02

(54) **PLANUNG EINER ERWEITERTEN BAHN FÜR EINE AUTONOME MOBILE EINHEIT ZUM SPÄTEREN ABFAHREN TEMPORÄR VERSPERRTER BAHNBEREICHE**
PROGRAMMING OF AN EXTENDED PATH FOR AN AUTONOMOUS MOBILE UNIT FOR THE SUBSEQUENT TRAVERSING OF PATH SECTIONS THAT ARE TEMPORARILY BLOCKED
PROGRAMMATION D'UNE VOIE D'EXTENSION POUR UNE UNITE MOBILE, EN VUE DE L'UTILISATION ULTERIEURE DE PORTIONS DE VOIE TEMPORAIREMENT BLOQUEES

(30) Priorität: 03.08.2001 DE 10138259
(43) Veröffentlichungstag der Anmeldung: 28.04.2004
(73) Patentinhaber: SIEMENS AKTIENGESELLSCHAFT, 80333 München (DE)
(72) Erfinder: HERZ, Torsten, 91090 Effeltrich (DE); FIEGERT, Michael, 81739 München (DE)
(86) Internationale Anmeldenummer: PCT/DE2002/002851
(87) Internationale Veröffentlichungsnummer: WO 2003/014852

(56) Entgegenhaltungen:
- SCHMIDT G ET AL: "An advanced planning and navigation approach for autonomous cleaning robot operations" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, 13. Oktober 1998 (1998-10-13), Seiten 1230-1235, XP010311555 ISBN: 0-7803-4465-0
- KURABAYASHI D ET AL: "Local path re-planning for unforeseen obstacle avoidance by an autonomous sweeping robot" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, 16. Mai 1998 (1998-05-16), Seiten 3153-3158, XP010281319 ISBN: 0-7803-4300-X

## Beschreibung

Die Erfindung betrifft ein Verfahren und eine Anordnung zur Planung einer erweiterten Bahn für eine autonome mobile Einheit sowie ein Computerprogrammerzeugnis und ein computerlesbares Speichermedium mit einem darauf gespeicherten Computerprogrammerzeugnis zur Planung einer erweiterten Bahn für eine autonome mobile Einheit.

Immer häufiger werden sich wiederholende Tätigkeiten Servicerobotern übertragen. Beispiele für solche Tätigkeiten sind Reinigungsaufgaben, Transportaufgaben, das Ausbringen von Saatgut auf entsprechende Flächen oder beispielsweise das Rasenmähen.

Bei solchen Servicerobotern, an welchen zugehörige Flächenbearbeitungsgeräte angebracht sind, besteht das Problem, das dieses Flächenbearbeitungsgerät möglichst den gesamten zur Verfügung stehenden Raum überstreichen soll, wobei möglich wenig Wege doppelt gefahren werden sollen.

Dabei soll auch der Aufwand für die Planung dieser Bahn so gering sein, dass wenig Rechenkapazität dafür verwendet werden muss. Nur so kann ein akzeptables Zeitverhalten beim Planungsvorgang sichergestellt werden.

Bei einem Reinigungsroboter, der beispielsweise in einem Supermark Reinigungsaufgaben durchführen soll, besteht das zusätzliche Problem, dass bei einem Einsatz während der Öffnungszeiten des Supermarktes zusätzliche Hindernisse in Form von Kunden mit Einkaufswagen auftreten.

Für den Fall, dass die Abmessungen des Arbeitsbereiches und die darin vorhandenen Hindernisse in ihrer Lage bekannt sind, kann mit Hilfe eines Vorabbahnplanungsverfahren eine optimale Bahn geplant werden, deren Abfahren möglichst wenig Zeit kostet und die dabei möglichst viel von der abzufahrenden Fläche berücksichtigt. Nach Durchführung der Vorabplanung und Ermittlung der vorabgeplanten Bahn, beginnt der Serviceroboter diese Bahn abzufahren.

Ein solches Vorabplanungsverfahren ist beispielsweise aus DE 198 04 195 A1 bekannt.

Für den Fall aber, dass Hindernisse kurzzeitig auftreten, zum Beispiel Kunden mit ihren Einkaufswagen, können diese folglich nicht bei der Vorabplanung der Bahn berücksichtigt werden.

In einem solchen Fall stellt der Serviceroboter dieses Hindernis während der Fahrt fest. Der Serviceroboter führt ein Ausweichmanöver durch, d.h. der Serviceroboter verläßt die vorabgeplante Bahn, umrundet das Hindernis und kehrt nach dem Ausweichmanöver wieder auf seine ursprüngliche Bahn zurück.

Eine Planung und eine Durchführung eines solchen Ausweichmanövers ist ebenfalls aus DE 198 04 195 A1 bekannt.

Das Stück der ursprünglichen Bahn, welches durch das Ausweichmanöver nicht abgefahren wurde, bleibt zu diesem Zeitpunkt aber unbearbeitet bzw. ungereinigt und muß zu einem späteren Zeitpunkt nachbearbeitet bzw. nachgereinigt werden.

Für eine Nachbearbeitung solcher nicht bearbeiteten Bahnstücke sind zwei verschiedenen Nachplanungsverfahren bekannt.

Bei dem ersten Nachplanungsverfahren wird das zuvor durchgeführte Vorabplanungsverfahren ein weiteres Mal durchgeführt.

Das bereits abgefahrene und dementsprechend bearbeitete Teilstück der ursprünglichen Bahn wird dabei nicht mehr berücksichtigt, während jedoch das nicht bearbeitete, ausgelassene Teilstück bei der Nachplanung mitberücksichtigt wird.

Diese Vorgehensweise weist aber den Nachteil auf, dass für den restlichen, noch zu bearbeiteten Teil der ursprüngliche Bahn durch Mitberücksichtigung des ausgelassen Teilstücks eine komplett neue Bahn ermittelt wird. Diese komplette Neuplanung aber führt zu unnötig langen Planungszeiten und einem großen Bedarf an Rechenleistung.

Das zweite bekannte Nachplanungsverfahren sieht in einem solchen Fall vor, dass das nicht bearbeitete Bahnstück am Ende der ursprünglichen Bahn angefügt und nach Beendigung der ursprünglichen Bahn abgefahren wird. Diese Vorgehensweise führt aber zu unnötig verlängerten Bahnen und ist damit ebenfalls ineffizient.

Weitere Bahnplanungsverfahren sind aus "Approximation Algorithms for Lawn Mowing and Milling", Arkin E.M. et al., Angewandte Mathematik und Informatik, Universität zu Köln, Report No. 97.255, 1997 bekannt.

Die Druckschrift SCHMIDT G ET AL: "An advanced planning and navigation approach for autonomous cleaning robot operations"INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA, IEEE, US, 13. Oktober 1998 (1998-10-13), Seiten 1230-1235, XP010311555 ISBN: 0-7803-4465-0 offenbart ein Verfahren und eine Vorrichtung zur Planung einer erweiterten Bahn für eine autonome mobile Einheit zum nächtlichen Abfahren temporär versperrter Bahnteilstücke. In der Druckschrift werden temporär versperrte Bereiche zwischengespeichert. Am Ende der vorab geplanten Bearbeitungsbahn erfolgt eine Bahnerweiterungsplanung, um die gespeicherten Bereiche auf kürzestem Weg abzufahren.

Somit liegt der Erfindung die Aufgabe zugrunde, ein Bahnplanungsverfahren für eine autonome mobile Einheit anzugeben, dass eine effiziente und flexible Planung einer um eine Ausweichbahn erweiterten Bahn ermöglicht.

Das Problem wird durch das Verfahren und die Anordnung zur Planung einer erweiterten Bahn für eine autonome mobile Einheit sowie durch das entsprechende Computerprogrammerzeugnis mit den Merkmalen gemäß dem jeweiligen unabhängigen Patentanspruch gelöst.

Bei dem Verfahren zur Planung einer erweiterten Bahn für eine autonome mobile Einheit wird ein Teilstück einer vorgegebenen Bahn ermittelt, welches von der autonomen mobilen Einheit nicht abfahrbar ist. Ein solches nicht abfahrbares Teilstück kann dann auftreten, falls ein Hindernis die vorgegebene Bahn blockiert.

In der Regel ist eine solche Blockade nur vorübergehend, so dass das Teilstück zeitweise nicht abfahrbar ist.

Bei dem Verfahren wird im weiteren Bahnverlauf ein erster Bahnpunkt der vorgegebenen Bahn ermittelt unter Verwendung mindestens eines vorgebbaren Abstandskriteriums, welches einen Abstand des Teilstücks zu dem ersten Bahnpunkt berücksichtigt.

Sodann wird ein Erweiterungsteilstück ermittelt, welches an dem ersten Bahnpunkt beginnt, an einem zweiten Bahnpunkt der vorgegebenen Bahn endet und mindestens das nicht abfahrbare Teilstück umfasst.

Bei der Planung der erweiterten Bahn wird das Erweiterungsteilstück an dem ersten Bahnpunkt in die vorgegebene Bahn eingefügt.

Die Anordnung zur Planung einer erweiterten Bahn für eine autonome mobile Einheit weist eine Bahnplanungseinheit auf, beispielsweise einen Computerprozessor, welcher zur Durchführung der erfindungsgemäßen Verfahrensschritte eingerichtet ist.

Das Computerprogramm-Erzeugnis, das ein computerlesbares Speichermedium umfasst, auf dem ein Programm gespeichert ist, ermöglicht einem Computer, nachdem es in einen Speicher des Computers geladen worden ist, die erfindungsgemäßen Schritte zur Planung einer erweiterten Bahn für eine autonome mobile Einheit durchzuführen.

Die Anordnung sowie das Computerprogrammerzeugnis und das computerlesbare Speichermedium sind insbesondere auch geeignet zur Durchführung einer der nachfolgend erläuterten Weiterbildungen des erfindungsgemäßen Verfahrens.

Ein besonderer Vorteil der Erfindung liegt darin, dass bei der Planung der erweiterten Bahn die vorgegebene, ursprüngliche Bahn als Grundlage für die Planung zusätzlicher Teilstücke der Erweiterungsbahn, mit welchen die vorgegebene Bahn nur erweitert bzw. ergänzt wird, genutzt wird. Damit ist keine Neuplanung, welche eine gegenüber der ursprünglichen Bahn stärk veränderte Streckenführung aufweisen würde, notwendig.

Damit lässt sich Rechenleistung und Speicherplatz einsparen. Außerdem wird das Planungsverfahren beschleunigt.

Ferner weist die Erfindung den Vorteil auf, dass bei der Planung der erweiterten Bahn keine zusätzliche Information, beispielsweise eine neu aufzunehmende Umgebungsinformation, notwendig ist. Bei der Planung der erweiterten Bahn wird nur auf bereits in der vorgegebenen Bahn enthaltene Information zurückgegriffen.

Dies ist insbesondere dann sehr vorteilhaft, wenn die vorgegebene Bahn manuell eingebrachtes Wissen enthält, das automatisch nicht oder nur sehr schwer zu generieren ist.

Bevorzugte Weiterbildungen der Erfindung ergeben sich aus den abhängigen Ansprüchen.

Die im Weiteren beschriebenen Weiterbildungen beziehen sich sowohl auf die Verfahren als auch auf die Anordnung.

Die Erfindung und die im Weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im Weiteren beschriebenen Weiterbildung möglich durch ein Computerprogrammerzeugnis, welches ein Speichermedium aufweist, auf welchem ein Computerprogramm gespeichert ist, welches die Erfindung oder Weiterbildung ausführt.

Zusätzlich zu dem Abstandskriterium bei der Ermittlung des ersten Bahnpunkts können weitere Kriterien verwendet werden, beispielsweise ein Kinematikkriterium, welches eine kinematische Eigenschaft der autonomen mobilen Einheit berücksichtigt.

Ein weiteres Kriterium bzw. weitere Kriterien kann bzw. können sein ein Zeitkriterium und/oder ein Bearbeitungskriterium, welche/welches eine Fahrzeit und/oder eine Fahrstrecke der autonomen mobilen Einheit berücksichtigt bzw. berücksichtigen.

Ferner ist es auch möglich, die Ermittlung des ersten Bahnpunkts auch unter Verwendung von Standardverfahren einer Graphentheorie nach Dijkstra, welche aus "Introduction to Algorithms" , Thomas H. Cormen et al., The MIT Press, Cambridge, Massachusetts, 23. Auflage, London, 1999, Mac Graw-Hill Book Company New York, bekannt sind, durchzuführen.

In einer Ausgestaltung umfasst das Erweiterungsteilstück zusätzlich zu dem durch die autonome mobile Einheit nicht abfahrbarem Teilstück mindestens ein weiteres Teilstück der vorgegebenen Bahn.

Bei einer Weiterbildung ist der zweite Bahnpunkt mit dem ersten Bahnpunkt identisch. Anschaulich bedeutet dies, dass die autonome mobile Einheit an einem Bahnpunkt die ursprünglich geplante Bahn verlässt, dann das zu einem früheren Zeitpunkt nicht abfahrbare Teilstück abfährt und anschließend an demselben Bahnpunkt wieder auf die ursprünglich geplante Bahn zurückkehrt.

Unter bestimmten Umständen, beispielsweise bei einer komplexen Bahnführung, kann es hinsichtlich einer möglichst kurzen und effektiven Bahnführung günstig sein, dass der zweite Bahnpunkt auf der vorgegebenen Bahn nach dem ersten Bahnpunkt liegt. Dadurch lässt sich ein mehrfaches Abfahren desselben Bahnstücks vermeiden.

Vorzugsweise wird das Verfahren zur Planung einer erweiterten Bahn für eine autonome mobile Einheit eingesetzt in einem rekursiven Bahnplanungsverfahren derart,
dass die erweiterte Bahn, welche in einem vorangehenden Iterationsschritt ermittelt wurde, die vorgegebene Bahn eines dem vorangehenden Iterationsschritt nachfolgenden Iterationsschritts ist. Damit ist es möglich, plötzlich auftretende neue Hindernisse unverzüglich durch eine Erweiterungsplanung zu berücksichtigen, ohne bei einem Auftreten der neuen Hindernisse jeweils eine komplette neue Bahn ermitteln zu müssen.
In einer Ausgestaltung wird das Verfahren oder eine Weiterbildung davon eingesetzt bei einem Reinigungsroboter, welcher in diesem Fall die erweiterte Bahn im Rahmen einer Reinigungstätigkeit abfährt und zumindest Teile der erweiterten Bahn reinigt.

Es zeigen
- Figur 1: eine Landkarte eines von einem Reinigungsroboter zu reinigenden Raums mit einer vorabgeplanten Reinigungsbahn;
- Figur 2: eine Skizze eines Reinigungsroboters mit einer Reinigungsvorrichtung und Aufnahmemitteln;
- Figur 3: eine Landkarte eines von einem Reinigungsroboter zu reinigenden Raums mit einer vorabgeplanten Reinigungsbahn und einem Hindernis, welches einen Teil einer vorabgeplanten Bahn blockiert, sowie einer erweiterten Nachreinigungsbahn;
- Figur 4: eine Landkarte eines von einem Reinigungsroboter zu reinigenden Raums mit einer vorabgeplanten Reinigungsbahn, einem ersten Hindernis, welches einen ersten Teil der vorabgeplanten Bahn blockiert, einer zugehörigen ersten erweiterten Nachreinigungsbahn und einem zweiten Hindernis, welches einen zweiten Teil der vorabgeplanten Bahn blockiert, sowie einer zugehörigen zweiten alternativen erweiterten Nachreinigungsbahn;
- Figur 5: ein Ablaufdiagramm, in dem Verfahrensschritte eines Ausführungsbeispiels dargestellt sind;
- Figur 6a bis 6f: Landkarten eines von einem Reinigungsroboter zu reinigenden Raums mit Reinigungsbahnen und Hindernissen gemäß einem aufgezeichneten Log-File;

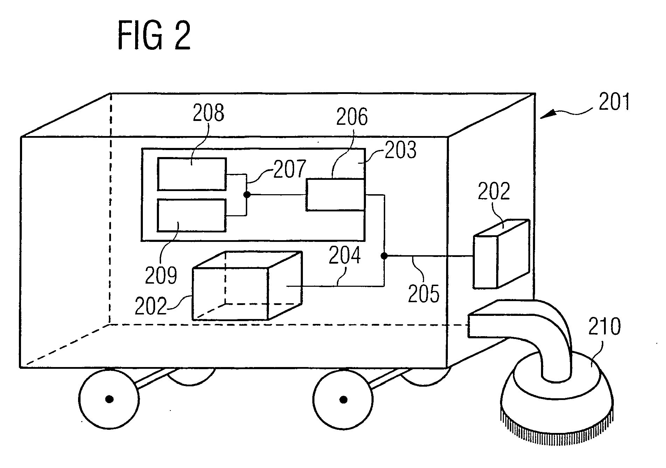

Fig.2 zeigt einen Reinigungsroboter 201 mit einer Reinigungsvorrichtung 210 und mehreren Laserscannern 202. Die Laserscanner 202 nehmen Bilder einer Umgebung des Reinigungsroboters 201 auf und führen die Bilder einer Recheneinheit 203 über Verbindungen 204, 205 zu.

Über eine Eingangs-/ Ausgangsschnittstelle 206, die über einen Bus 207 mit einem Speicher 208 sowie einem Prozessor 209 verbunden ist, werden die Bildsignale dem Speicher 208 zugeführt.

Das im weiteren beschriebene Verfahren wird in dem Prozessor 209 durchgeführt. Somit ist der Prozessor 209 derart eingerichtet, dass die im weiteren beschriebenen Verfahrensschritte durchführbar sind.

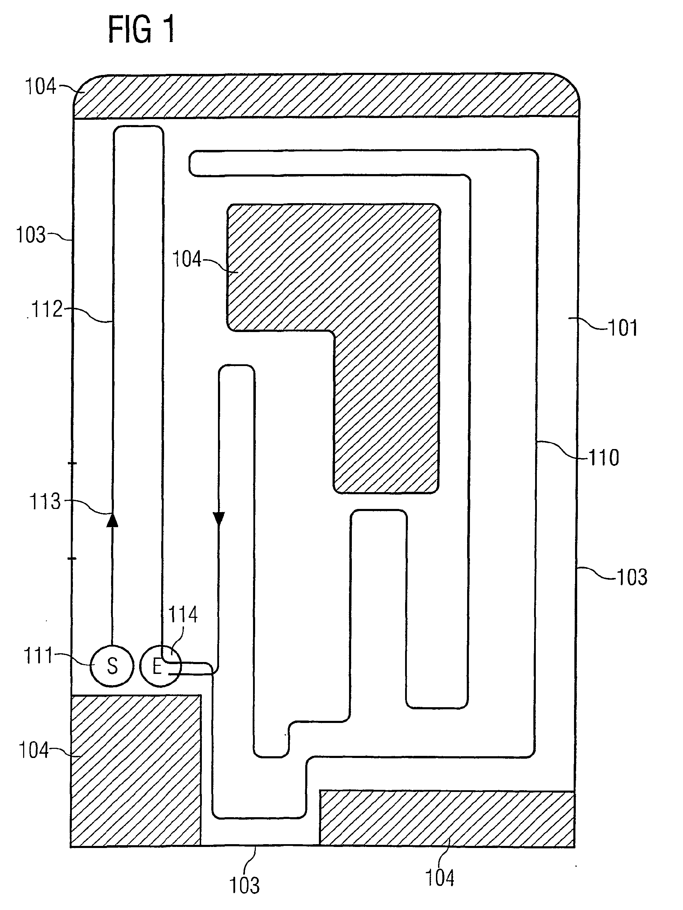

Fig.1 zeigt symbolisch eine von dem Reinigungsroboter 201 erstellte Landkarte 101, die einen von dem Reinigungsroboter 201 zu reinigenden Raum darstellt. Anschaulich gesehen ist eine solche Landkarte 101 ein elektronisches Abbild des zu reinigenden Raums.

Die Landkarte 101 wird von dem Reinigungsroboter 201 erstellt derart, dass dieser sich durch den Raum bewegt und Bilder seiner Umgebung zu unterschiedlichen Zeitpunkten und an unterschiedlichen Orten in dem zu reinigenden Raum mit den Laserscannern 202 aufnimmt.

Die aufgenommenen Bilder des Raums werden von dem Reinigungsroboter 201 gespeichert und zu der Landkarte 101, welche ebenfalls gespeichert wird, zusammengeführt.

Somit sind in der Landkarte 101 Wände 103 des Raums und auch Hindernisse 104 in Form von Regalen oder Schränken, die in den Raum hineinragen, abgebildet.

Unter Verwendung der Landkarte 101 bestimmt der Reinigungsroboter 201 im Rahmen einer Vorabplanung unter Verwendung eines Vorabbahnplanungsverfahren eine optimale, vorabgeplante Reinigungsbahn 110, deren Abfahren möglichst wenig Zeit kostet, aber möglichst viel von der abzufahrenden und zu reinigenden Fläche des Raums berücksichtigt.

Diese vorabgeplante Reinigungsbahn 110 wird in die Landkarte 101 eingetragen und gespeichert.

In Fig.1 ist die vorabgeplante Bahn 110 dargestellt. Die vorabgeplante Bahn 110 beginnt in Punkt S (Start) 111 und führt von diesem entlang einer dargestellten Bahnlinie 112 in Pfeilrichtung 113 zu Punkt E (Ende) 114.

Das von dem Reinigungsroboter 201 durchgeführte Vorabplanungsverfahren ist in DE 198 04 195 A1 beschrieben.

Nach Durchführung der Vorabplanung und Ermittlung der vorabgeplanten Bahn 110, beginnt der Serviceroboter im Rahmen eines Reinigungsvorgangs diese Bahn 110 abzufahren. Bei dem Reinigungsvorgang steht die Reinigungsvorrichtung 210 des Reinigungsroboters 201 in einem Wirkkontakt mit dem Boden des zu reinigenden Raums.

Der Reinigungsroboter 201 bewegt sich entlang der vorabgeplanten und gespeicherten Bahn 110 bzw. dargestellten Bahnlinie 112 und nimmt in periodischen Abständen Bilder seiner Umgebung auf. Durch einen Vergleich der aufgenommenen Bilder mit der gespeicherten Landkarte 101 orientiert sich der Roboter 201 in dem Raum.

Der Reinigungsroboter 201 fährt solange entlang der vorabgeplanten Bahn 110 bis er ein neues Hindernis detektiert, welches bei der Vorabplanung nicht berücksichtigt wurde und welches einen Teil der vorabgeplanten Bahn 110 blockiert.

Ein solches Hindernis kann beispielsweise ein sich dem Raum befindliche Person oder ein weiterer mobiler Einrichtungsgegenstand sein.

Die Blockade der vorabgeplanten Bahn 110 durch das neue Hindernis verhindert das Abfahren eines Teilstücks der ursprünglichen Bahn 110 und erfordert eine Planung einer Ausweichbahn bzw. einer Nachreinigungsbahn.

Dabei umfasst eine solche Nachreinigungsbahn nicht nur einen geänderten Bahnverlauf im engeren Sinn, d. h. nicht nur eine Bahn beim Umrunden des neuen Hindernisses oder nicht nur ein zusätzliches, an einer späteren Stelle der vorabgeplanten Bahn eingefügtes Nachreinigungsteilstück, sondern den gesamten, neugeplanten Bahnverlauf, welcher auch gegenüber der vorabgeplanten Bahn unterverändert geblieben Bahnstücke umfasst.

Eine Planung und eine Durchführung eines Bahnteilsstücks für ein Umrunden bzw. Umfahren eines Hindernisses ist in DE 198 04 195 A1 beschrieben.

Im folgenden wird die Planung einer solchen Nachreinigungsbahn beschrieben.

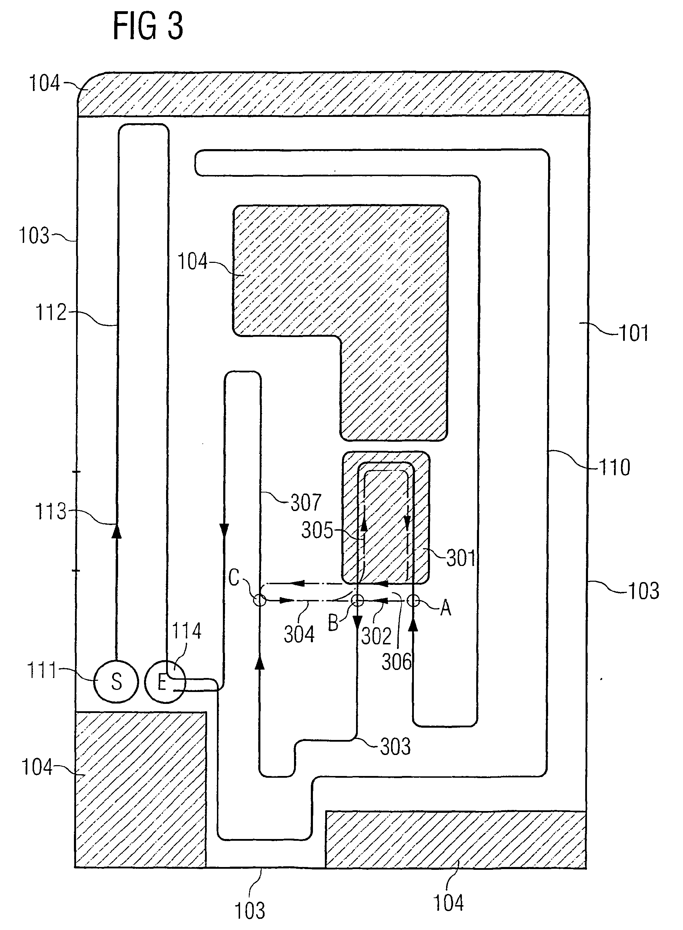

Fig.3 zeigt die gespeicherte Landkarte 101 mit der vorabgeplanten Bahn 110, einem neuen Hindernis 301 sowie eine von dem Reinigungsroboter geplante Nachreinigungsbahn mit den Teilbahnstücken 302, 303, 304, 305, 306 und 307.

Bei der Planung einer Nachreinigungsbahn werden folgenden grundlegenden Planungsstrategien angewendet:
a) Bei einem durch ein Hindernis blockiertes Teilstück der vorabgeplanten Bahn, welches an späterer Stelle der vorabgeplanten Bahn ein weiteres Mal abgefahren wird, wird keine Nachreinigungsbahn geplant. Das Hindernis wird engst möglichst umfahren. Dabei wird ein vorab festgelegter Sicherheitsabstand berücksichtigt.
b) Bei einem durch ein Hindernis blockiertes Teilstück der vorabgeplanten Bahn, welches an späterer Stelle der vorabgeplanten Bahn kein weiteres Mal abgefahren wird, wird eine Nachreinigungsbahn geplant derart:
b0) Die Nachreinigungsbahn umfasst das Teilbahnstück, auf welchem der Reinigungsroboter das neue Hindernis engst möglichst bei Einhaltung eines vorab festgelegten Sicherheitsabstands umfährt.
b1) Es wird derjenige Bahnpunkt der vorabgeplanten Bahn ermittelt, welcher zu dem blockierten und beim Umfahren des neuen Hindernisses ausgelassenen Teilbahnstücks der vorabgeplanten Bahn bzw. dem Hindernis den geringsten Abstand aufweist. An diesem nächstliegenden Bahnpunkt wird ein zusätzliches Bahnstück in die vorabgeplante Bahn eingefügt.
b2) Das zusätzlich einzufügende Teilstück führt von dem nächstliegenden Bahnpunkt zu demjenigen Bahnpunkt der vorabgeplanten Bahn, an dem der Reinigungsroboter beim Umfahren des neuen Hindernisses die vorabgeplante Bahn verlässt oder diese nach Umfahren des neuen Hindernisses wieder betritt (Annäherungsteilstück).
b3) Ferner umfasst das zusätzlich einzufügende Teilstück das beim Umfahren des neuen Hindernisses ausgelassene Teilstück, welches an das Annäherungsteilstück angehängt wird.
b4) An das angehängte Teilstück wird ein Rückführungsteilstück angefügt, welches wieder zurück zu dem nächstliegenden Bahnpunkt führt.
b5) Der weitere Verlauf der Nachreinigungsbahn entspricht dem ursprünglichen verlauf der vorabgeplanten Bahn.
c) Die Nachreinigungsbahn tritt im weiteren Verlauf des Reinigungsvorgangs an die Stelle der vorabgeplanten Bahn.
d) Trifft der Reinigungsroboter im weiteren Verlauf des Reinigungsvorgangs, d.h. beim Abfahren der an die Stelle der ursprünglichen, vorabgeplanten Bahn getretenen Nachreinigungsbahn, auf ein weiteres neues Hindernis, so werden oben beschriebene Planungsstrategien entsprechend ein weiteres Mal rekursiv durchgeführt.

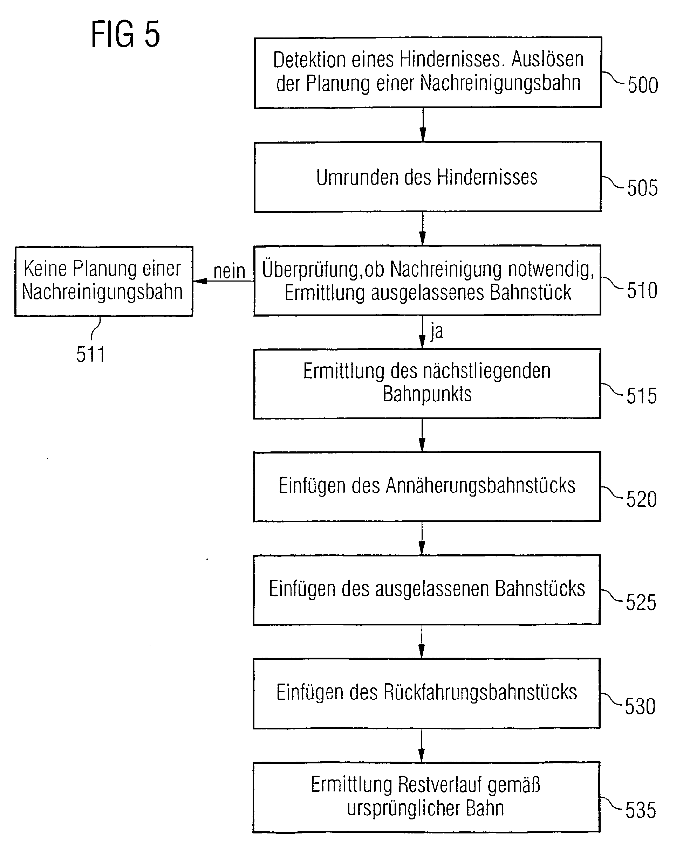

Gemäß obiger grundlegender Planungsstrategien wird vom Reinigungsroboter 201 die im folgenden beschrieben Nachreinigungsbahn 302 bis 307 ermittelt. Entsprechende Verfahrenschritte sind in Fig.5 dargestellt:

Erreicht der Reinigungsroboter 201 Bahnpunkt A, an welchem der das neue Hindernis 301 detektiert, so löst er die Planung der Nachreinigungsbahn 302 bis 307 aus (500).

Die Nachreinigungsbahn 302 bis 307 führt von dem Bahnpunkt A entlang des neuen Hindernisses 301 302, wobei ein vorgegebener Sicherheitsabstand zu dem neuen Hindernis 301 berücksichtigt wird (505).

An Punkt B trifft die Nachreinigungsbahn 302 bis 307 wieder auf die ursprüngliche, vorabgeplante Bahn 110. Der Reinigungsroboter speichert, dass das Bahnstück 305 der vorabgeplanten Bahn 110, welches von den Punkten A und B begrenzt wird, nicht abgefahren bzw. gereinigt und damit ausgelassen wurde (505).

Anschließend überprüft der Reinigungsroboter 201, ob dieses nicht abgefahrene bzw. ausgelassene Bahnstück 305 an einer späteren Stelle der vorabgeplanten Reinigungsbahn 110 ein weiteres Mal abgefahren wird (510).

Dieses trifft für die vorabgeplante Reinigungsbahn 110 nicht zu, so dass eine Nachreinigung des ausgelassenen Teilstücks 305 und eine entsprechende Planung der Nachreinigungsbahn 302 bis 307 notwendig ist. Andernfalls wäre keine weitere Planung der Nachreinigungsbahn 302 bis 307 notwendig (511). Der ursprünglich, vorabgeplante Bahnverlauf 112 wäre weiterhin maßgebend.

Der Reinigungsroboter 201 überprüft die nachfolgenden Bahnpunkte des weiteren Verlaufs der vorabgeplanten Bahn 110 dahingehend, welcher Bahnpunkt den geringsten Abstand zu dem ausgelassenen Bahnstück 305 aufweist (515).

Dabei ermittelt er den Bahnpunkt C, an welchem Bahnteilstücke 304 bis 306 der Nachreinigungsbahn 302 bis 307 eingefügt werden (515).

Im weiteren verläuft die Nachreinigungsbahn 302 bis 307 von Punkt B entlang der ursprünglichen Bahn 110 zu Punkt C 303. Von Punkt C verläuft die Nachreinigungsbahn in kürzester Verbindung zu Punkt B 304, welches der letzte Bahnpunkt des ausgelassenen Teilstücks 305 ist (520).

Von Punkt B verläuft die Nachreinigungsbahn 302 bis 307 entlang der ursprünglichen Bahn 110 zu Punkt A 305, wobei das ausgelassene Teilstück 305 entgegen der ursprünglich geplanten Fahrtrichtung abgefahren und dabei gereinigt wird (525).

Von Punkt A verläuft die Nachreinigungsbahn 302 bis 307 in kürzester Verbindung 306 zurück zu Punkt C und damit wieder auf die ursprüngliche vorabgeplante Bahn 110 (530).

Der nachfolgende Verlauf 307 der Nachreinigungsbahn 302 bis 307 entspricht dem ursprünglichen Verlauf der vorabgeplanten Bahn 110 und endet im Punkt E (535).

Im folgenden werden Alternativen Ai (i = Nummer der jeweiligen Alternative) zu dem Ausführungsbeispiel beschrieben.
A1) In einer Alternative zu dem Ausführungsbeispiel wird die Landkarte 101 nicht durch Abfahren und Aufnehmen des zu reinigenden Raums erzeugt, sondern wurde vorab erstellt, beispielsweise durch ein Programmieren, und ist in dem Reinigungsroboter gespeichert.
A2) In einer weiteren Alternative zu dem Ausführungsbeispiel wird bei der Ermittlung des nächstliegenden Punktes C, dem Einfügungspunkt des Erweiterungsteilstücks, zusätzlich zu dem Abstandkriterium ein Kinematikkriterium verwendet, welches eine kinematische Eigenschaft der autonomen mobilen Einheit berücksichtigt.
   Weist beispielsweise ein Reinigungsroboter 201 eine Dreiradkinematik auf, d.h. der Reinigungsroboter bewegt sich nur auf drei Rädern, so können bestimmte Punkte im Raum nur sehr schwer und nur in einer bestimmten Ausrichtung des Reinigungsroboters angefahren werden. In solchen Fällen wäre dann ein aufwendiges Rangiermanöver, um in eine vorbestimmte Ausrichtung zu kommen, von dem Reinigungsroboter durchzuführen.
   Bei dieser Alternative wird der nächstliegende Punkt C entlang der vorabgeplanten Bahn verschoben, bis er auch kinematisch günstig, d.h. ohne ein großes Rangiermanöver, von dem Reinigungsroboter angefahren werden kann. Die weiteren Planungsschritte werden entsprechend dem ursprünglichen Verfahren durchgeführt.
A3) In einer weiteren Alternative zu dem Ausführungsbeispiel werden bei der Ermittlung des nächstliegenden Punktes C, dem Einfügungspunkt des Erweiterungsteilstücks, zusätzlich zu dem Abstandkriterium ein Zeitkriterium und ein Bearbeitungskriterium, welche eine Fahrzeit und eine Fahrstrecke des Reinigungsroboters berücksichtigen.
   Bei dieser Alternative wird der nächstliegende Punkt C entlang der vorabgeplanten Bahn verschoben, bis er auch unter zeitlich und bearbeitungstechnischen Bedingungen günstig angefahren werden kann. Die weiteren Planungsschritte werden entsprechend dem ursprünglichen Verfahren durchgeführt.
   Unter zeitlich günstigen Bedingungen ist eine möglichst kurze Reinigungsdauer zu verstehen. Unter bearbeitungstechnisch günstigen Bedingungen sind möglichst effiziente Reinigungspositionen zu verstehen.
A4) Eine vierte Alternative zu dem Ausführungsbeispiel betrifft die Ermittlung des Rückführungsteilstücks 306 (Strategieschritt b4).

So kann es beispielsweise hinsichtlich einer Reinigungseffizienz günstiger sein, dass das Rückführungsteilstück an einem anderen Bahnpunkt der vorabgeplanten Bahn endet als im Ausgangspunkt, d.h. im nächstliegenden Punkt C (vgl. Ausführungsbeispiel).

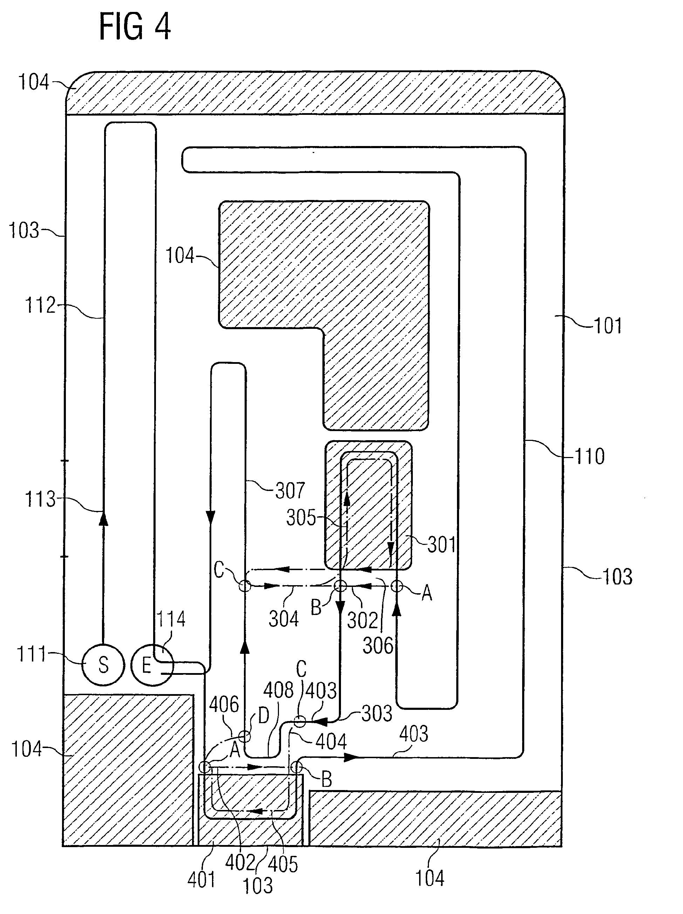

Einen solchen Fall zeigt Fig.4.

Fig.4 zeigt die gespeicherte Landkarte 101 mit der Konfiguration gemäß dem Ausführungsbeispiel, d.h. mit der vorabgeplanten Bahn 110, dem neuen Hindernis 301 sowie die von dem Reinigungsroboter geplante Nachreinigungsbahn mit den Teilbahnstücken 302, 303, 304, 305, 307 und 307.

Darüber hinaus zeigt Fig.4 ein weiteres neues Hindernis 401 sowie die zugehörige, von dem Reinigungsroboter geplante Nachreinigungsbahn mit den Teilbahnstücken 402, 403, 404, 405, 406 und 407.

In diesem Fall endet das Rückführungsteilstück 406 nicht im Punkt C sondern in einem Punkt D. Das Bahnteilstück 408 der ursprünglichen Bahn 110 zwischen den Punkten C und D bleibt bei diesem Fall ungereinigt.

Es ist anzumerken, dass das ursprüngliche Planungsverfahren auch durch beliebige Kombinationen der beschriebenen Alternativen modifiziert werden kann.

Im weiteren ist ein während eines Reinigungsvorgangs von dem Reinigungsroboter aufgezeichnetes, kommentiertes Log-File angegeben.

Im allgemeinen wird ein solches Log-File während eines Reinigungsvorgangs (online) erstellt. Der Reinigungsroboter zeichnet alle Planungsvorgänge sowie Fahrvorgänge auf, welche in dem Log-File gespeichert werden. Damit können die Planungsvorgänge und die Fahrvorgänge nach Beendigung des Reinigungsvorgangs nachvollzogen und kontrolliert werden.

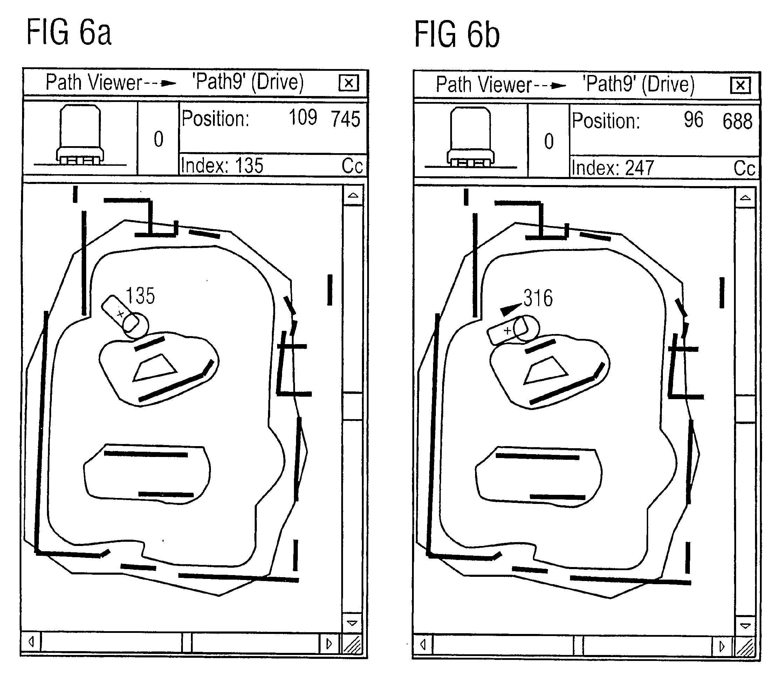

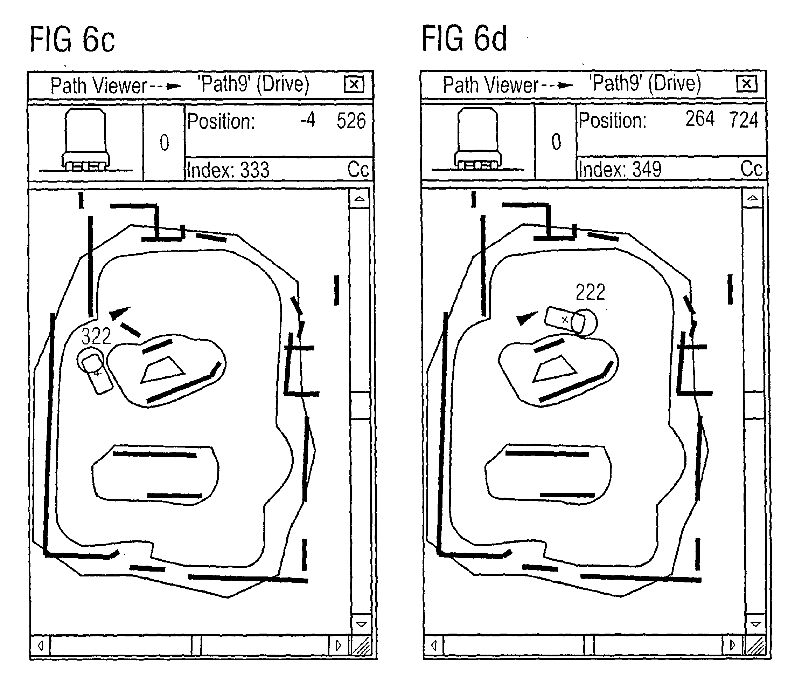

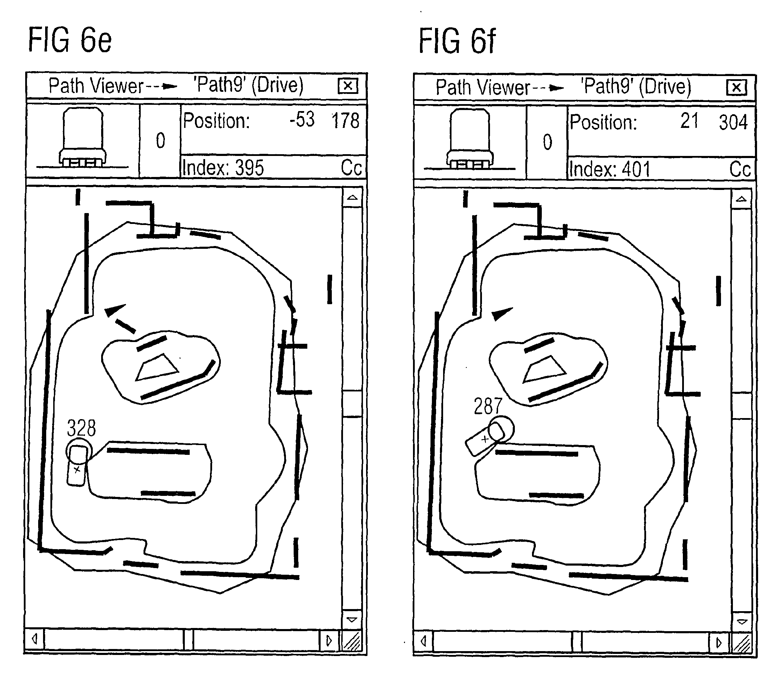

In dem nachfolgend angegeben Log-File sind verschiedene, von dem Reinigungsroboter abgefahrene Bahnverläufe (Fig.6a bis Fig.6f) aufgezeichnet und kommentiert, welche Bahnverläufe gemäß den im vorhergehenden beschriebenen Planungsverfahren ermittelt wurden.

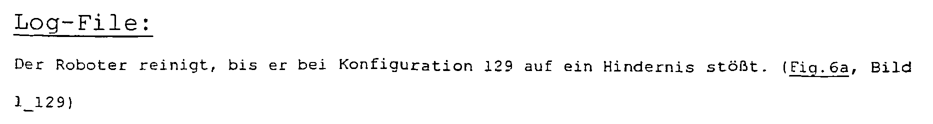

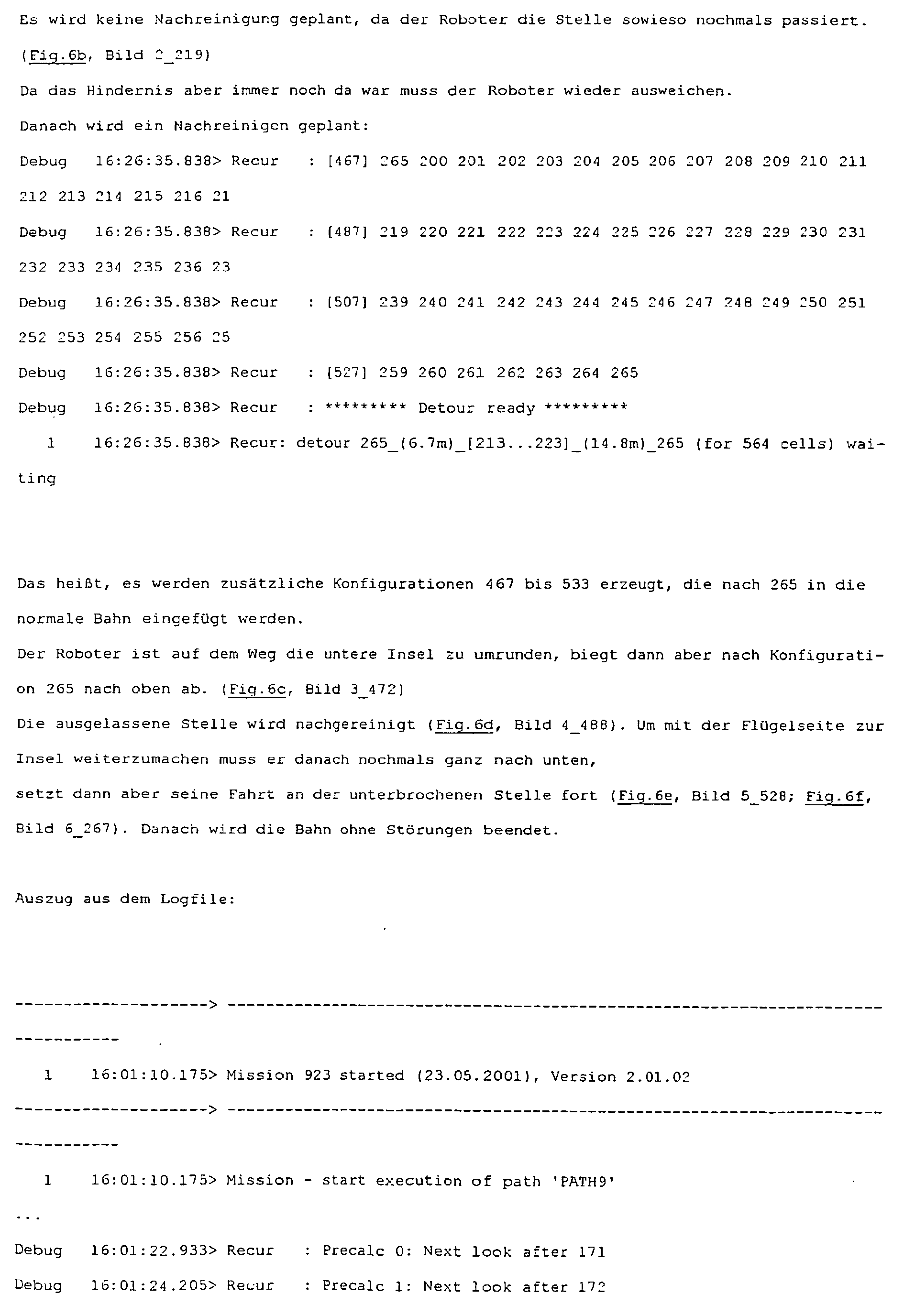

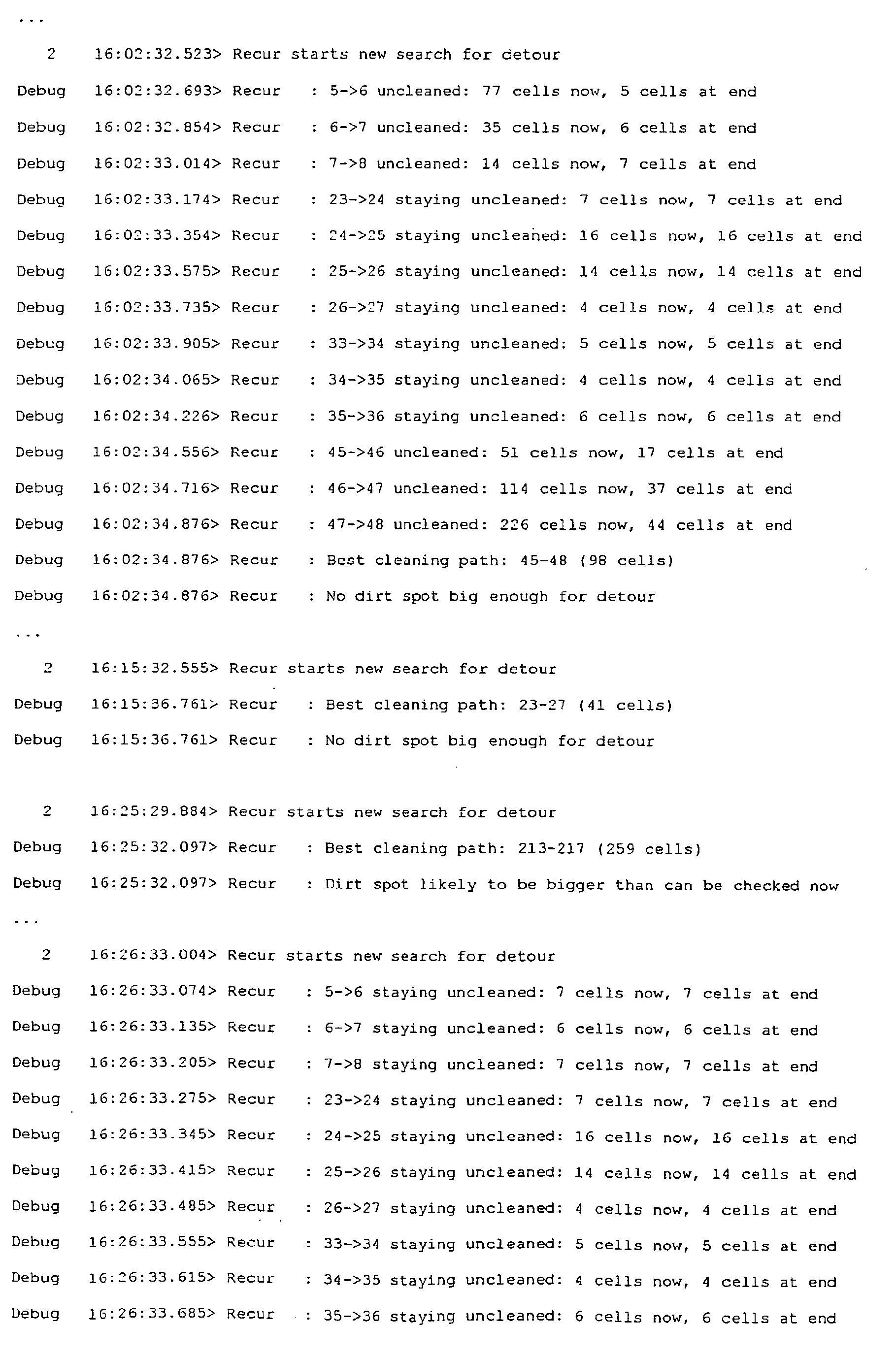

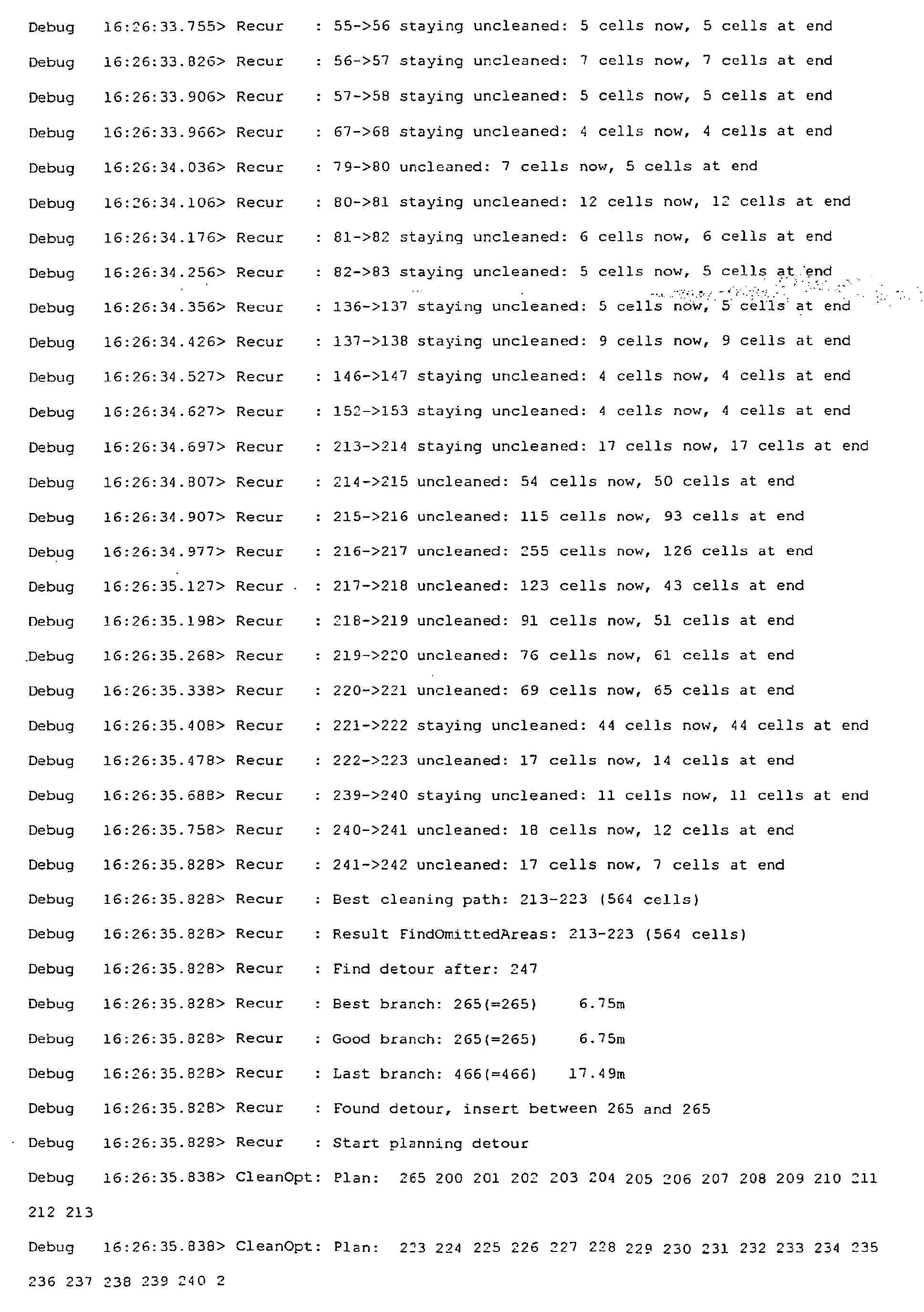

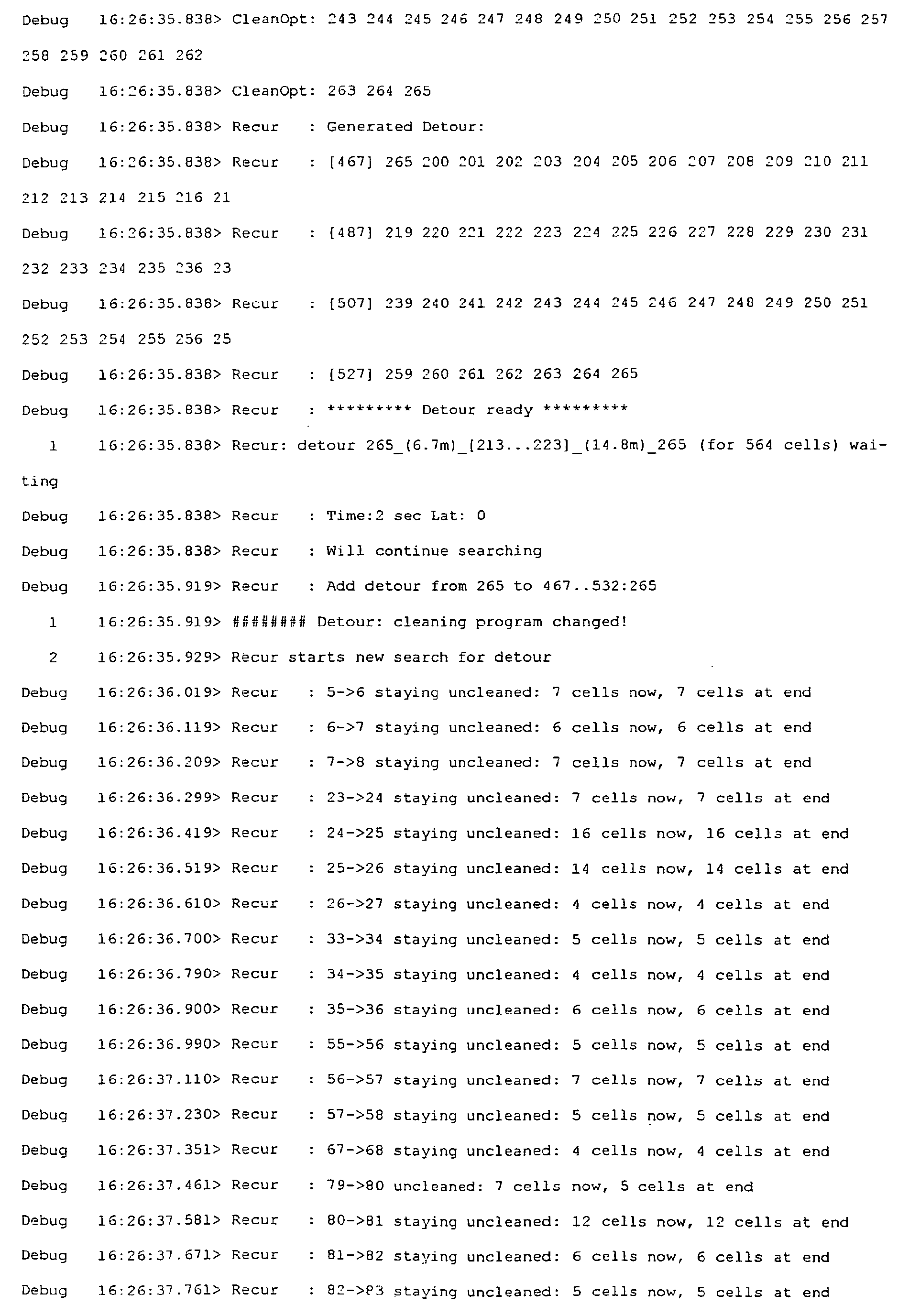

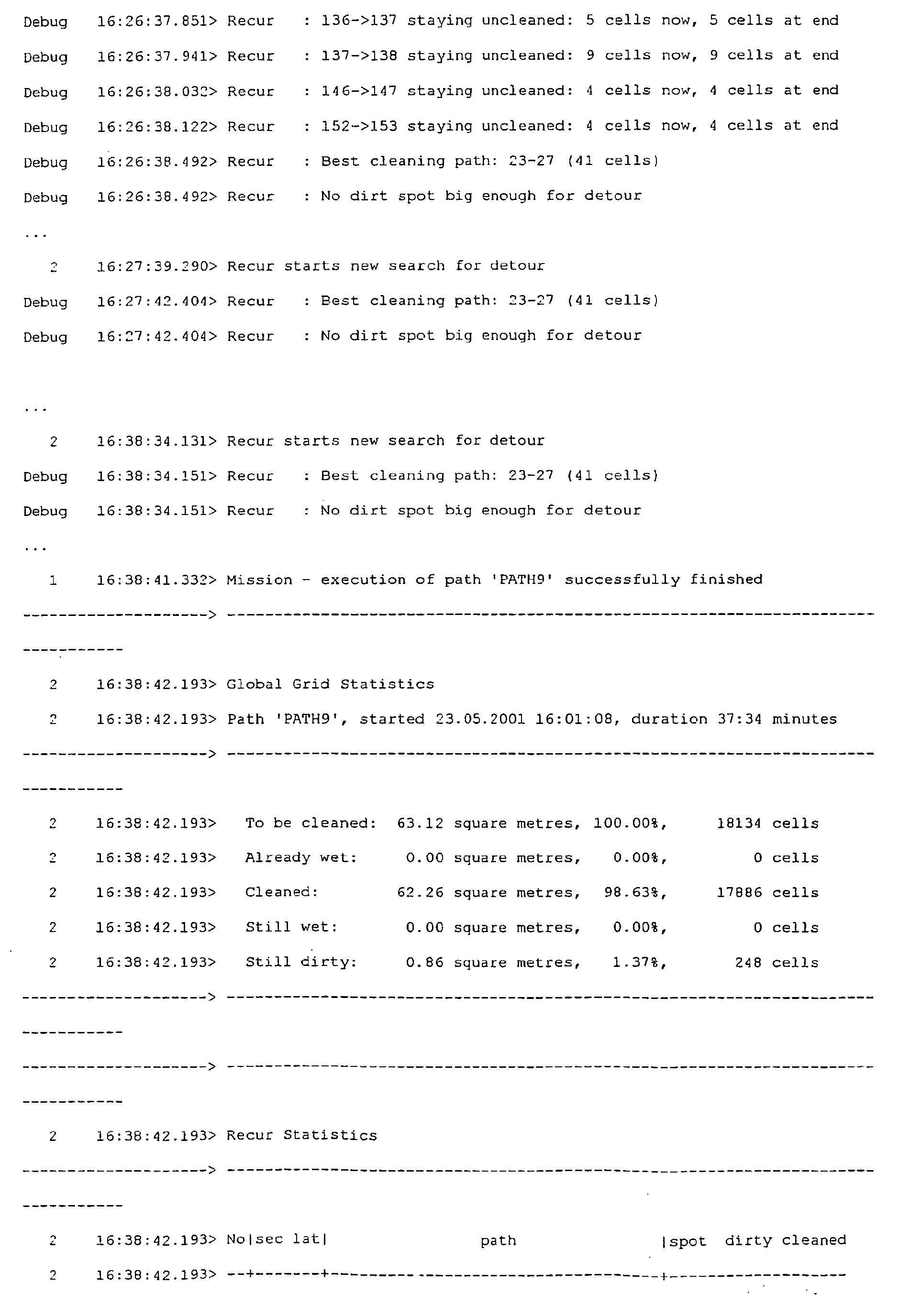

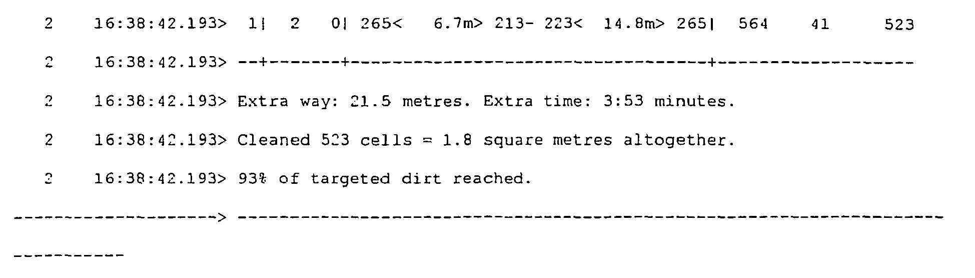

## Patentansprüche

1. Verfahren zur Planung einer erweiterten Bahn für eine autonome mobile Einheit
- bei dem ein Teilstück einer vorgegebenen Bahn ermittelt wird, welches von der autonomen mobilen Einheit nicht abfahrbar ist,
**dadurch gekennzeichnet, dass**
- im weiteren Bahnverlauf ein erster Bahnpunkt der vorgegebenen Bahn unter Verwendung mindestens eines vorgebbaren Abstandskriteriums, welches einen Abstand des nicht abfahrbaren Teilstücks zu dem ersten Bahnpunkt berücksichtigt, ermittelt wird,
- ein Erweiterungsteilstück ermittelt wird, welches an dem ersten Bahnpunkt beginnt, an einem zweiten Bahnpunkt der vorgegebenen Bahn endet und mindestens das nicht abfahrbare Teilstück umfasst,
- die erweiterte Bahn geplant wird, wobei das Erweiterungsteilstück an dem ersten Bahnpunkt in die vorgegebene Bahn eingefügt wird.

2. Verfahren nach Anspruch 1,
bei dem bei der Ermittlung des ersten Bahnpunkts zusätzlich zu dem Abstandskriterium weitere Kriterien verwendet werden.

3. Verfahren nach Anspruch 2,
bei dem eines der weiteren Kriterien ein Kinematikkriterium ist, welches eine kinematische Eigenschaft der autonomen mobilen Einheit berücksichtigt.

4. Verfahren nach Anspruch 2,
bei dem eines/weitere der weiteren Kriterien ein Zeitkriterium und/oder ein Bearbeitungskriterium sind/ist, welche/welches eine Fahrzeit und/oder eine Fahrstrecke der autonomen mobilen Einheit berücksichtigt.

5. Verfahren nach einem der Ansprüche 1 bis 4,
bei dem das Erweiterungsteilstück mindestens ein weiteres Teilstück der vorgegebenen Bahn umfasst.

6. Verfahren nach einem der Ansprüche 1 bis 5,
bei dem der zweite Bahnpunkt mit dem ersten Bahnpunkt identisch ist.

7. Verfahren nach einem der Ansprüche 1 bis 5,
bei dem der zweite Bahnpunkt auf der vorgegebenen Bahn nach dem ersten Bahnpunkt liegt.

8. Verfahren nach einem der vorangehenden Ansprüche, eingesetzt in einem rekursiven Bahnplanungsverfahren derart, dass die erweiterte Bahn, ermittelt in einem vorangehenden Iterationsschritt, die vorgegebene Bahn eines dem vorangehenden Iterationsschritt nachfolgenden Iterationsschritts ist.

9. Verfahren nach einem der vorangehenden Ansprüche,
bei dem die autonome mobile Einheit ein Reinigungsroboter ist.

10. Verfahren nach Anspruch 9,
eingesetzt bei einer Reinigung der vorgegebenen Bahn durch den Reinigungsroboter.

11. Anordnung zur Planung einer erweiterten Bahn für eine autonome mobile Einheit mit eine Bahnplanungseinheit,
**dadurch gekennzeichnet, dass**
die Bahnplanungseinheit zur Durchführung der Schritte des Verfahrens nach einem der Ansprüche 1 bis 10 eingerichtet ist.

12. Anordnung nach Anspruch 11,
bei der die Bahnplanungseinheit ein Computerprozessor ist.

13. Computerprogramm-Erzeugnis, das ein computerlesbares Speichermedium umfasst, auf dem ein Programm gespeichert ist, das es einem Computer ermöglicht, nachdem es in einen Speicher des Computers geladen worden ist, Schritte zur Planung einer erweiterten Bahn für eine autonome mobile Einheit durchzuführen, **dadurch gekennzeichnet, dass** die Schritte zur Planung der erweiterten Bahn die Schritte nach einem der Ansprüche 1 bis 10 sind.

## Claims

1. Method for planning an extended path for an autonomous mobile unit,
- wherein a sub-section of a predefined path is determined, which sub-section cannot be traversed by the autonomous mobile unit,
**characterised in that**
- in the further course of the path a first path point of the predefined path is determined using at least one predefinable distance criterion which takes into account a distance of the non-traversable sub-section from the first path point,
- an extension sub-section is determined which begins at the first path point, ends at a second path point of the predefined path and includes at least the non-traversable sub-section,
- the extended path is planned, with the extension sub-section being inserted into the predefined path at the first path point.

2. Method according to claim 1,
wherein further criteria are used for determining the first path point.

3. Method according to claim 2,
wherein one of the further criteria is a kinematic criterion which takes into account a kinematic characteristic of the autonomous mobile unit.

4. Method according to claim 2,
wherein one of the/other further criteria is/are a time criterion and/or a processing criterion which takes/take into account a travel time and/or a travel route of the autonomous mobile unit.

5. Method according to one of claims 1 to 4,
wherein the extension sub-section includes at least one further sub-section of the predefined path.

6. Method according to one of claims 1 to 5,
wherein the second path point is identical to the first path point.

7. Method according to one of claims 1 to 5,
wherein the second path point is situated on the predefined path after the first path point.

8. Method according to one of the preceding claims,
applied in a recursive path planning method in such a way that the extended path, which was determined in a preceding iteration step, is the predefined path of an iteration step following the preceding iteration step.

9. Method according to one of the preceding claims,
wherein the autonomous mobile unit is a cleaning robot.

10. Method according to claim 9,
applied during cleaning of the predefined path by the cleaning robot.

11. Arrangement for planning an extended path for an autonomous mobile unit having a path planning unit,
**characterised in that**
the path planning unit is configured for performing the steps of the method according to one of claims 1 to 10.

12. Arrangement according to claim 11,
wherein the path planning unit is a computer processor.

13. Computer program product which includes a computer-readable storage medium on which is stored a program which allows a computer, after said program has been loaded into a memory of the computer, to execute steps for planning an extended path for an autonomous mobile unit, **characterised in that** the steps for planning the extended path are the steps according to one of claims 1 to 10.

## Revendications

1. Procédé pour planifier un parcours étendu pour une unité mobile autonome
- dans lequel une portion d'un parcours prédéfini est déterminée, laquelle ne peut pas être explorée par l'unité mobile autonome,
**caractérisé en ce que**
- dans le tracé ultérieur du parcours, un premier point du parcours prédéfini est déterminé en utilisant au moins un critère de distance prédéfinissable, qui prend en compte une distance de la portion non explorable au premier point de parcours,
- on détermine une portion d'extension qui commence au premier point de parcours, se termine en un second point du parcours prédéfini et comprend au moins la portion non explorable,
- le parcours étendu est planifié, la portion d'extension étant insérée au premier point dans le parcours prédéfini.

2. Procédé selon la revendication 1,
dans lequel d'autres critères sont utilisés lors de la détermination du premier point de parcours en supplément du critère de distance.

3. Procédé selon la revendication 2,
dans lequel l'un des autres critères est un critère de cinématique qui prend en compte une propriété cinématique de l'unité mobile autonome.

4. Procédé selon la revendication 2,
dans lequel l'un/d'autres des autres critères est/sont un critère de temps et/ou un critère de traitement, qui prend en compte un temps de déplacement et/ou un tronçon de déplacement de l'unité mobile autonome.

5. Procédé selon l'une quelconque des revendications 1 à 4,
dans lequel la portion d'extension comprend au moins une autre portion du parcours prédéfini.

6. Procédé selon l'une quelconque des revendications 1 à 5,
dans lequel le second point de parcours est identique au premier point de parcours.

7. Procédé selon l'une quelconque des revendications 1 à 5,
dans lequel le premier point de parcours est situé sur le parcours prédéfini après le premier point de parcours.

8. Procédé selon l'une quelconque des revendications précédentes, utilisé dans un procédé récursif de planification de parcours, de telle sorte que le parcours étendu, déterminé dans une étape d'itération précédente, est le parcours prédéfini d'une étape d'itération qui suit l'étape d'itération précédente.

9. Procédé selon l'une quelconque des revendications précédentes, dans lequel l'unité mobile autonome est un robot de nettoyage.

10. Procédé selon la revendication 9, utilisé lors d'un nettoyage du parcours prédéfini par le robot de nettoyage.

11. Dispositif pour planifier un parcours étendu pour une unité mobile autonome avec une unité de planification de parcours, **caractérisé en ce que** l'unité de planification de parcours est aménagée pour mettre en oeuvre les étapes du procédé selon l'une quelconque des revendications 1 à 10.

12. Dispositif selon la revendication 11, sur lequel l'unité de planification de parcours est un processeur d'ordinateur.

13. Produit de programme informatique qui comprend un support de stockage pouvant être lu par un ordinateur, sur lequel est stocké un programme qui permet à un ordinateur, une fois qu'il a été téléchargé dans une mémoire de l'ordinateur, d'effectuer des étapes pour planifier un parcours étendu pour une unité mobile autonome, **caractérisé en ce que** les étapes pour la planification du parcours étendu sont les étapes selon l'une quelconque des revendications 1 à 10.
